# DEMANDE DE BREVET EUROPEEN

(11) **EP 2 573 333 A1**
(43) Date de publication de la demande: **27.03.2013**
(21) Numéro de dépôt: 12185254.5
(22) Date de dépôt: 20.09.2012
(51) Int. Cl.: F01D 21/12, F02C 9/26, F02C 9/28, F02C 9/32, F02C 9/46

(54) **Procédé et système de commande d'arrêt d'une turbine à gaz**

(30) Priorité: 20.09.2011 FR 1158342
(71) Demandeur: GE Energy Products France SNC, 90000 Belfort (FR)
(72) Inventeur: Bonnemaison, Antoine, 90000 BELFORT (FR); Gartner, Benoît, 68250 Rouffach (FR); Klejc, Adrian, 08110 SIEDLCE (PL); Lefin, Jérome, 90300 ELOIE (FR); Orensanz, Xavier, 90000 BELFORT (FR); Solacolu, Christian, 90800 BAVILLIERS (FR); Wadjou, Charles, 90000 BELFORT (FR)
(74) Mandataire: Delprat, Olivier

(57) **Abrégé**

Système de commande d'arrêt d'une turbine à gaz (T), comprenant des moyens de mesure (1) de la vitesse de rotation (θ̇) de l'arbre de la turbine (T) et des moyens de commande (3) du taux d'ouverture de vannes (V) d'alimentation de la turbine (T) en combustible.

Le système comprend des moyens de mesure (2) de la température (T°) à l'échappement de la turbine (T), et en ce que les moyens de commande (3) comprennent des moyens de régulation (10) de la décélération de l'arbre apte à déterminer le taux d'ouverture des vannes (V) d'alimentation en combustible à partir de la température à l'échappement (T°) et de la vitesse de rotation (θ̇) de l'arbre.

## Description

L'invention concerne l'arrêt d'une turbine à gaz, et plus particulièrement l'arrêt contrôlé d'une turbine à gaz pour assurer un arrêt normal sans perte de flamme.

Une centrale thermique de production d'électricité est composée d'une ou plusieurs turbines à gaz et de systèmes auxiliaires permettant la surveillance et la commande, ainsi que la régulation et l'alimentation de plusieurs circuits tels que le système d'alimentation en combustible, le système de refroidissement, le système de lubrification et le débit d'air à l'entrée du compresseur.

Le système de contrôle pendant la phase d'arrêt assure la surveillance de paramètres critiques tels que le taux de décélération, la vitesse et la température de gaz d'échappement. Ces paramètres permettent d'assurer un temps d'arrêt tout en évitant la perte de flamme dans les chambres à combustion ainsi que les chocs thermiques.

Les conditions limites de ces paramètres dépendent souvent du taux de décélération et du dégrée d'ouverture/fermeture de vannes d'alimentation en combustible.

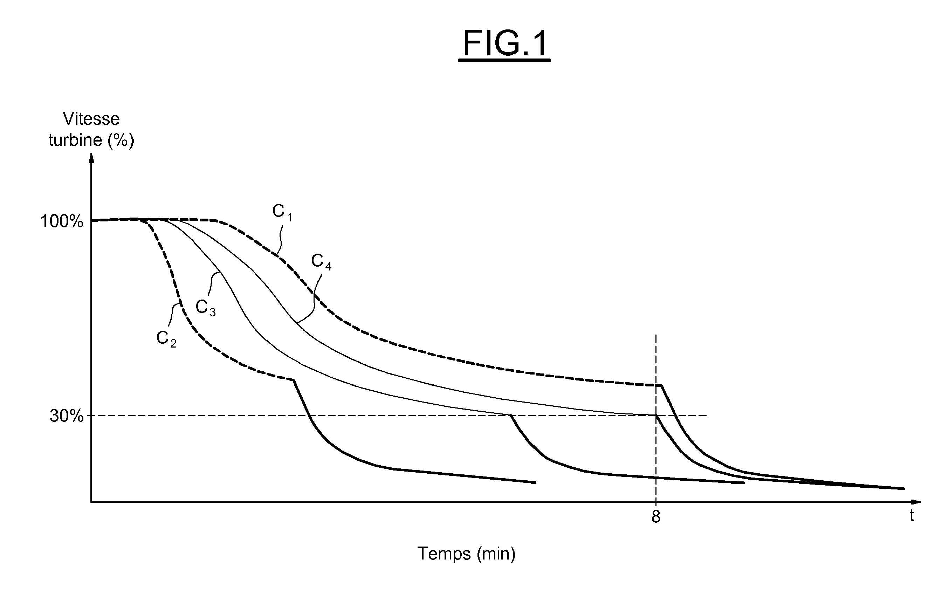

Comme cela est illustré sur la figure 1 sur laquelle sont représentées des courbes de variations de la vitesse de la turbine en pourcentage en fonction du temps de décélération, il existe plusieurs taux de décélération possibles pour atteindre une vitesse de 30% lors de la phase d'arrêt. Toutefois, ces taux de décélération font varier le temps nécessaire à l'arrêt et peuvent dépasser un temps limite d'arrêt, par exemple de huit minutes sur cet exemple (courbe C₁). De plus, une courbe de décélération trop rapide augmente le risque de perte de flamme, comme cela est illustré par la courbe C₂ qui présente un taux de décélération important ayant entraîné une perte de flamme.

Les courbes C₃ et C₄ présentent des exemples de taux de décélération permettant l'arrêt de la turbine à gaz en un temps inférieur au temps limite d'arrêt et évitant d'entraîner une perte de flamme.

Durant la phase d'arrêt de la turbine, le débit d'air à l'entrée du compresseur est contrôlé par des aubes directrices à ouverture variable. Lorsque ces aubages sont fermés, la consigne de débit de combustible est modifiée pour commander une diminution progressive de la température à l'échappement tout en évitant l'extinction de la flamme et un pic de température à l'échappement.

Les procédés connus de commande d'arrêt d'une turbine à gaz sont généralement basés sur les caractéristiques théoriques des gaz, en fonction de la composition la plus courante, et non sur la composition mesurée en ligne.

D'autres procédés connus sont basés sur l'estimation du débit minimal d'ouverture de la vanne d'alimentation afin d'éviter la perte de flamme, ou bien sur le débit de combustible estimé en fonction de la vitesse de la turbine.

Cependant, ces procédés ne tiennent pas compte de mesures en temps réel du taux de décélération ni de l'impact de changements de paramètres tels que la composition de gaz.

Plusieurs méthodes de détection de la perte de flammes existent. Cependant, ces méthodes sont généralement onéreuses ou présentent des problèmes de précision de la mesure. Par exemple, les méthodes basées sur la détection directe de la perte de flamme présentent un problème de précision. Les méthodes basées sur la mesure de la température à l'échappement présentent un problème de temps de réponse et de connaissance du rapport entre la température d'échappement et la température de la flamme. Celles basées sur une mesure du pouvoir calorique inférieur du combustible sont des solutions onéreuses et peu rapides. Enfin, les méthodes basées sur la mesure du débit d'alimentation en combustible présentent également un problème de précision.

Un objectif de l'invention est l'implémentation de manière simple et économique d'un procédé de commande afin d'assurer un temps nécessaire à l'arrêt de la turbine sans risquer de perdre la flamme.

Pour optimiser l'arrêt de la turbine à gaz, il faut atteindre 30% de la vitesse dans un temps de 8 minutes, éviter de perdre la flamme et maintenir une température de gaz d'échappement inférieure à une valeur limite.

L'invention propose un procédé permettant de calculer en continue la variation du taux de décélération variable en fonction de la vitesse de la turbine entre 100% et 30%, tout en prenant en compte la limite de température à l'échappement afin de réguler le débit de combustible progressivement.

Selon un aspect, il est proposé, dans un mode de réalisation, un système de commande d'arrêt d'une turbine à gaz, comprenant des moyens de mesure de la vitesse de rotation de l'arbre de la turbine et des moyens de commande du taux d'ouverture de vannes d'alimentation de la turbine en combustible afin de contrôler le taux de taux de décélération.

Selon une caractéristique générale, le système comprend des moyens de mesure de la température à l'échappement de la turbine, et les moyens de commande comprennent des moyens de régulation de la décélération de l'arbre apte à déterminer le taux d'ouverture des vannes d'alimentation en combustible à partir de la température à l'échappement et de la vitesse de rotation de l'arbre.

Le taux de décélération peut ainsi être contrôlé par rapport à la vitesse de rotation de l'arbre et de sorte que la température à l'échappement reste inférieure à une température limite.

Avantageusement, les moyens de commande peuvent comprendre un module de détermination d'un taux de décélération idéal en fonction de la vitesse mesurée de l'arbre, un module de calcul du taux de décélération instantané de l'arbre de la turbine, et un premier soustracteur adapté pour calculer la différence entre le taux de décélération idéal et le taux de décélération instantané.

Un profil idéal de décélération en fonction de la vitesse peut être déterminé auparavant par un modèle mathématique ou sur la base d'une courbe pondérée déterminée à partir de l'analyse d'une flotte de turbines à gaz. Le taux de décélération est ainsi asservi par rapport à ce profil idéal de décélération. Le taux de décélération peut être déterminé par ailleurs, à partir de la dérivée de la mesure de la vitesse, ou à partir de deux mesures de vitesses séparées d'un intervalle de temps.

Les moyens de commande peuvent également comprendre un module de détermination d'une température d'échappement limite pour la vitesse mesurée de l'arbre, et un second soustracteur capable de calculer la différence entre la température d'échappement limite et la température d'échappement mesurée.

Le système peut avantageusement comprendre des moyens de mémorisation conservant en mémoire un profil idéal de décélération de l'arbre de la turbine en fonction de sa vitesse et une courbe limite de température à l'échappement en fonction de la vitesse de l'arbre.

Le profil idéal de décélération en fonction de la vitesse de l'arbre peut alors être transmis au module de détermination d'un taux de décélération idéal, et la courbe limite de température à l'échappement peut être transmise au module de détermination d'une température d'échappement limite.

De préférence, les moyens de régulation comprennent un premier module apte à déterminer un premier taux d'ouverture des vannes à partir de ladite différence de taux de décélération, un second module apte à déterminer un second taux d'ouverture des vannes à partir de ladite différence de température, et un module de sélection configuré pour sélectionner le taux d'ouverture minimum des vannes entre le premier taux d'ouverture des vannes et le second taux d'ouverture des vannes.

Selon un autre aspect, il est proposé dans un mode de mise en oeuvre, un procédé de commande d'arrêt d'une turbine à gaz, comprenant une mesure de la vitesse de rotation de l'arbre de la turbine et une commande du taux d'ouverture de vannes d'alimentation de la turbine en combustible.

Selon une caractéristique générale, le procédé comprend une mesure de la température d'échappement de la turbine et une détermination du taux d'ouverture des vannes d'alimentation en combustible à partir de la température à l'échappement et de la vitesse de rotation de l'arbre.

Avantageusement, le procédé peut comprendre une détermination d'un taux de décélération idéal en fonction de la vitesse mesurée de l'arbre, un calcul du taux de décélération instantané de l'arbre de la turbine, et un calcul de la différence entre le taux de décélération idéal et le taux de décélération instantané.

Il peut également comprendre une détermination d'une température d'échappement limite pour la vitesse mesurée de l'arbre, et un calcul de la différence entre la température d'échappement limite et la température d'échappement mesurée.

Il peut aussi comprendre une mémorisation d'un profil idéal de décélération de l'arbre de la turbine en fonction de sa vitesse, et une mémorisation d'une courbe limite de température à l'échappement en fonction de la vitesse de l'arbre.

De préférence, le procédé comprend la détermination d'un premier taux d'ouverture des vannes à partir de ladite différence de taux de décélération, la détermination d'un second taux d'ouverture des vannes à partir de ladite différence de température, et une sélection du taux d'ouverture minimum des vannes entre le premier taux d'ouverture des vannes et le second taux d'ouverture des vannes.

D'autres avantages et caractéristiques de l'invention apparaîtront à l'examen de la description détaillée de modes de mise en oeuvre et de modes de réalisation, nullement limitatifs, et des dessins annexés, sur lesquels :
- la figure 1, déjà décrite, illustre des courbes de variations de la vitesse de la turbine en pourcentage en fonction du temps de décélération ;
- la figure 2 présente de manière schématique un système de commande d'arrêt d'une turbine à gaz selon un mode de réalisation ;
- la figure 3 illustre un exemple de courbe de profil idéal de taux de décélération en fonction de la vitesse ;
- la figure 4 présente un synopsis d'un procédé de commande d'arrêt d'une turbine à gaz selon un mode de mise en oeuvre.

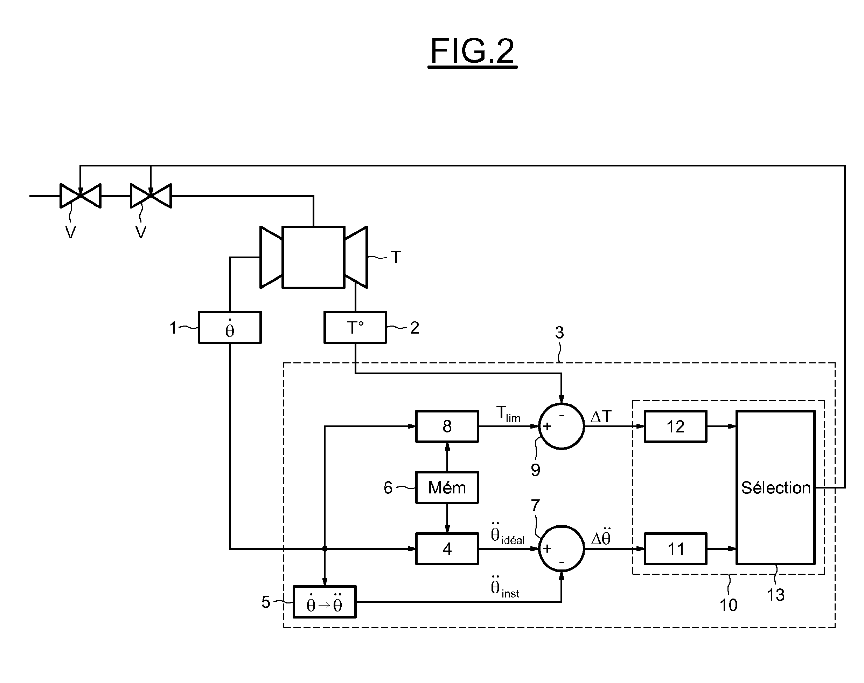

Sur la figure 2 est représenté de manière schématique un système de commande d'arrêt d'une turbine T à gaz selon un mode de réalisation.

Le système de commande comprend un capteur 1 de vitesse de rotation θ̇ de l'arbre de la turbine, des sondes de température 2 permettant de mesurer la température T° à l'échappement de la turbine à gaz T et des moyens de commande 3 du taux d'ouverture de vannes V d'alimentation de la turbine en combustible.

Les moyens de commande 3 comprennent un module 4 de détermination d'un taux de décélération idéal θ̈*_{idéal}* pour la vitesse mesurée de l'arbre θ̇, et un module 5 de calcul du taux de décélération instantané θ̈*ᵢₙₛₜ* de l'arbre de la turbine. Le module 5 de taux de décélération instantané θ̈*ᵢₙₛₜ* est couplé en entrée au capteur 1 de vitesse de rotation θ̇ de l'arbre. Il calcule le taux de décélération instantané θ̈*ᵢₙₛₜ* de la turbine à partir de la dérivée de la vitesse mesurée θ̇ de l'arbre.

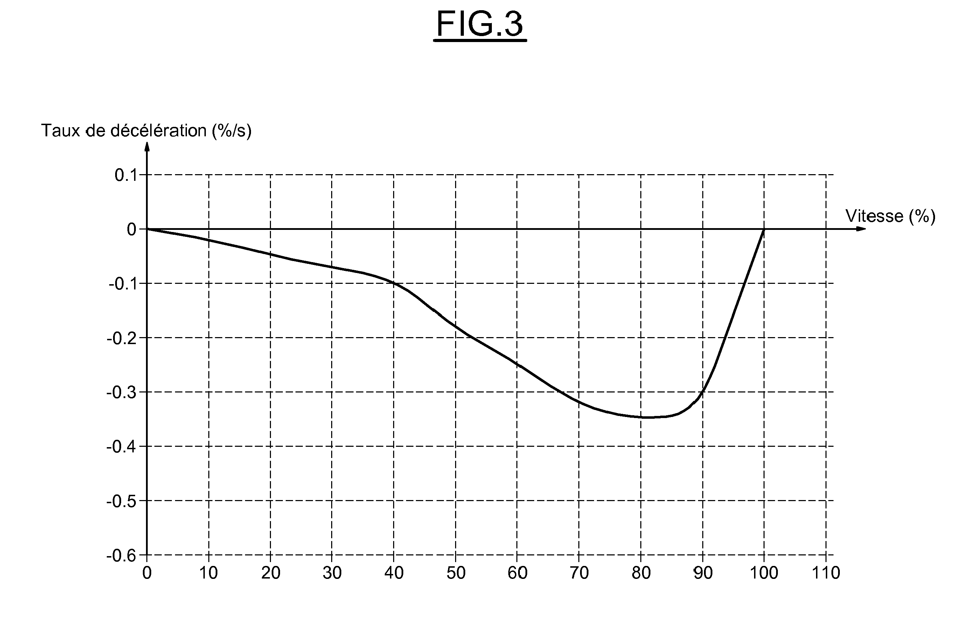

Le module 4 de détermination d'un taux de décélération idéal θ̈*_{idéal}* reçoit en entrée la vitesse de l'arbre θ mesurée par le capteur 1 de vitesse. Il détermine à partir de la courbe illustrée sur la figure 3 un taux de décélération idéal θ̈*_{idéal}* pour la vitesse mesurée θ̇, le taux de décélération idéal θ̈*_{idéal}* correspondant à un taux de décélération permettant d'arrêter la turbine en un temps inférieur au temps limite, par exemple de huit minutes, tout en évitant de perdre la flamme. Le profil de taux de décélération idéal θ̈*_{idéal}* en fonction de la vitesse illustré sur la figure 3 est obtenu préalablement à partir de mesures sur une flotte de turbines, et enregistré en usine dans une mémoire 6. La mémoire 6 délivre ainsi le profil idéal du taux de décélération en fonction de la vitesse au module 4 de détermination.

Les moyens de commande 3 comprennent un premier soustracteur 7 recevant en entrée le taux de décélération idéal θ̈*_{idéal}* pour la vitesse mesurée θ̇ déterminé par le module 4 de détermination ainsi que le taux de décélération instantané θ̈*ᵢₙₛₜ* calculé par le module 5 de calcul. Le premier soustracteur 7 délivre alors en sortie un écart de taux de décélération Δθ̈ résultant de la différence entre le taux de décélération idéal θ̈*_{idéal}* et le taux de décélération instantané θ̈*ᵢₙₛₜ*.

Les moyens de commande 3 comprennent en outre un module 8 de détermination d'une température limite Tₗᵢₘ en fonction de la vitesse mesurée θ̇. Le module 8 de détermination d'une température limite Tₗᵢₘ reçoit en entrée la vitesse mesurée θ̇ par le capteur 1 de vitesse ainsi qu'une courbe de température limite en fonction de la vitesse de rotation θ̇ de l'arbre préalablement enregistrée dans la mémoire 6.

Les moyens de commande 3 comprennent en outre un second soustracteur 9 recevant en entrée la température limite Tₗᵢₘ pour la vitesse mesurée θ̇ déterminée par le module 8 de détermination de la température limite ainsi que la température mesurée T° mesurée par les sondes de température 2. Le second soustracteur 9 délivre alors en sortie un écart de température ΔT résultant de la différence entre la température limite Tₗᵢₘ et la température mesurée T°.

Les moyens de commande 3 comprennent des moyens de régulation 10 de la décélération de l'arbre permettant de déterminer le taux d'ouverture des vannes V d'alimentation en combustible à partir de l'écart de température ΔT et de l'écart de taux de décélération Δθ̇. Les moyens de régulation 10 comportent un premier module 11 recevant en entrée l'écart de taux de décélération Δθ̈ délivré par le premier soustracteur 7. Le premier module 11 détermine alors un premier taux d'ouverture des vannes V. Les moyens de régulation 10 comportent également un second module 12 recevant en entrée l'écart de température AT. Le second module 12 détermine alors un second taux d'ouverture des vannes V.

Les moyens de régulation 10 comprennent en outre un module de sélection 13 configuré pour sélectionner le taux d'ouverture minimum des vannes V entre le premier taux d'ouverture des vannes V délivré par le premier module 11 et le second taux d'ouverture des vannes V délivré par le second module 12.

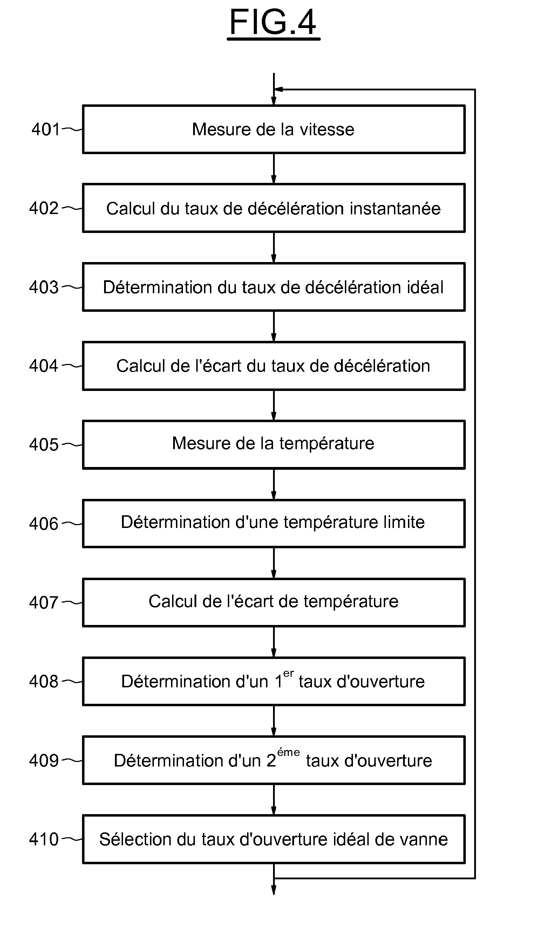

Sur la figure 4 est illustré un organigramme d'un procédé de commande d'arrêt d'une turbine à gaz selon un mode de mise en oeuvre.

Dans une première étape 401, on mesure la vitesse de rotation θ̇ de l'arbre de la turbine à l'aide du capteur de vitesse 1. On calcule, dans une étape suivante 402, un taux de décélération instantané θ̈*ᵢₙₛₜ* à partir de la dérivée de la vitesse mesurée θ̇ dans l'étape précédente.

Dans une étape 403, on détermine un taux de décélération idéal θ̈*_{idéal}* pour la vitesse mesurée θ̇. Le taux de décélération idéal θ̈*_{idéal}* est déterminé à partir d'un profil idéal de décélération en fonction de la vitesse de l'arbre de la turbine préalablement mémorisée.

Dans une étape suivante 404, on calcule l'écart de taux de décélération Δθ entre le taux de décélération idéal θ̈*_{idéal}* déterminé à l'étape 403 et le taux de décélération instantané θ̈*ᵢₙₛₜ* calculé à l'étape 402.

Dans une étape 405, on mesure la température à l'échappement T° de la turbine T à l'aide d'une sonde de température 2. On détermine ensuite, dans une étape 406, une température limite Tₗᵢₘ pour la vitesse de rotation θ̇ de l'arbre, mesurée par le capteur de vitesse 1. La température limite Tₗᵢₘ est déterminée à partir d'une courbe de température limite en fonction de la vitesse préalablement mémorisée. On calcule ensuite, dans une étape 407, l'écart de température ΔT entre la température limite Tₗᵢₘ ainsi déterminée et la température à l'échappement T° mesurée à l'étape 405 par la sonde de température 2.

Dans une étape 408, on détermine un premier taux d'ouverture des vannes V d'alimentation en combustible pour la turbine T à partir de l'écart de taux de décélération Δθ calculé à l'étape 404.

Dans une étape 409, on détermine un second taux d'ouverture des vannes V à partir de l'écart en température ΔT calculé à l'étape 407.

Dans une étape finale 410, on sélectionne le taux d'ouverture de vannes V permettant l'ouverture des vannes V la plus petite. Ainsi, les vannes sont fermées le plus rapidement possible tout en maintenant la température inférieure à une température limite, évitant ainsi les pics de températures, et tout en évitant de perdre la flamme.

Le système de commande d'arrêt de la turbine ainsi proposé permet d'optimiser l'arrêt de la turbine à gaz de manière à atteindre 30% de la vitesse dans un temps en 8 minutes tout en évitant de perdre la flamme et en maintenant la température de gaz d'échappement inférieure à le température limite.

## Revendications

1. Système de commande d'arrêt d'une turbine à gaz (T), comprenant des moyens de mesure (1) de la vitesse de rotation (θ̇) de l'arbre de la turbine (T) et des moyens de commande (3) du taux d'ouverture de vannes (V) d'alimentation de la turbine (T) en combustible, **caractérisé en ce qu'il** comprend des moyens de mesure (2) de la température (T°) à l'échappement de la turbine (T), et **en ce que** les moyens de commande (3) comprennent des moyens de régulation (10) de la décélération de l'arbre apte à déterminer le taux d'ouverture des vannes (V) d'alimentation en combustible à partir de la vitesse de rotation (θ̇) de l'arbre et de la température à l'échappement (T°) et de la vitesse de rotation (θ̇) de l'arbre.

2. Système selon la revendication 1, dans lequel les moyens de commande (3) comprennent un module (4) de détermination d'un taux de décélération idéal (θ̈*_{idéal}*) en fonction de la vitesse mesurée de l'arbre, un module (5) de calcul du taux de décélération instantané (θ̈*ᵢₙₛₜ*) de l'arbre de la turbine, et un premier soustracteur (7) adapté pour calculer la différence entre le taux de décélération idéal (θ̈*_{idéal}*) et le taux de décélération instantané (θ̈*ᵢₙₛₜ*).

3. Système selon l'une des revendications 1 ou 2, dans lequel les moyens de commande (3) comprennent un module (8) de détermination d'une température d'échappement limite (Tₗᵢₘ) en fonction de la vitesse mesurée de l'arbre, et un second soustracteur (9) capable de calculer la différence entre la température d'échappement limite (Tₗᵢₘ) et la température d'échappement mesurée (T°).

4. Système selon l'une des revendications 1 à 3, **caractérisé en ce qu'il** comprend des moyens de mémorisation (6) conservant en mémoire un profil idéal de décélération de l'arbre de la turbine en fonction de sa vitesse et une courbe limite de température à l'échappement en fonction de la vitesse de l'arbre.

5. Système selon les revendications 1 à 4, dans lequel les moyens de régulation (10) comprennent un premier module (11) apte à déterminer un premier taux d'ouverture des vannes à partir de ladite différence de taux de décélération (Δθ), un second module (12) apte à déterminer un second taux d'ouverture des vannes à partir de ladite différence de température (Δθ), et un module de sélection (13) configuré pour sélectionner le taux d'ouverture minimum des vannes entre le premier taux d'ouverture des vannes et le second taux d'ouverture des vannes.

6. Procédé de commande d'arrêt d'une turbine à gaz, comprenant une mesure de la vitesse de rotation (θ̇) de l'arbre de la turbine (T) et une commande du taux d'ouverture de vannes (V) d'alimentation de la turbine (T) en combustible, **caractérisé en ce qu'il** comprend une mesure de la température d'échappement (T°) de la turbine (T) et une détermination du taux d'ouverture des vannes (V) d'alimentation en combustible à partir de la température à l'échappement (T°) et de la vitesse de rotation de l'arbre (θ̇).

7. Procédé selon la revendication 6, comprenant une détermination d'un taux de décélération idéal (θ̈*_{idéal}*) en fonction de la vitesse mesurée (θ̇) de l'arbre, un calcul du taux de décélération instantané (θ̈*ᵢₙₛₜ*) de l'arbre de la turbine, et un calcul de la différence (Δθ) entre le taux de décélération idéal (θ̈*_{idéal}*) et le taux de décélération instantané (θ̈*ᵢₙₛₜ*).

8. Procédé selon l'une des revendications 6 ou 7, comprenant une détermination d'une température d'échappement limite (Tₗᵢₘ) en fonction de la vitesse mesurée (θ̇) de l'arbre, et un calcul de la différence (ΔT) entre la température d'échappement limite (Tₗᵢₘ) et la température d'échappement mesurée (T°).

9. Procédé selon l'une des revendications 6 à 8, comprenant une mémorisation d'un profil idéal de décélération de l'arbre de la turbine en fonction de sa vitesse, et une mémorisation d'une courbe limite de température à l'échappement en fonction de la vitesse de l'arbre.

10. Procédé selon l'une des revendications 6 à 9, comprenant la détermination d'un premier taux d'ouverture des vannes à partir de ladite différence de taux de décélération (Δθ̈), la détermination d'un second taux d'ouverture des vannes à partir de ladite différence de température (ΔT), et une sélection du taux d'ouverture minimum des vannes entre le premier taux d'ouverture des vannes et le second taux d'ouverture des vannes.
